# EUROPEAN PATENT APPLICATION

(11) **EP 3 355 092 A1**
(43) Date of publication of application: **01.08.2018**
(21) Application number: 17020120.6
(22) Date of filing: 28.03.2017
(51) Int. Cl.: G02B 6/44, G02B 6/02

(54) **OPTICAL FIBER FOR INDOOR APPLICATIONS**

(30) Priority: 25.01.2017 IN 201721002890
(71) Applicant: Sterlite Technologies Ltd, Maharashtra 431 136 (IN)
(72) Inventor: Coppin, Phill, 431136 Maharashtra (IN); Sahoo, Kishore, 431136 Maharashtra (IN); Pandey, Anand, 431136 Maharashtra (IN); Kumar, Sravan, 431136 Maharashtra (IN)
(74) Representative: Norris, Timothy Sweyn

(57) **Abstract**

Disclosed is an optical fiber (100). The optical fiber comprises (100) a core region (105) defined by a region around a central longitudinal axis (125). In addition, the optical fiber comprises (100) a cladding region (110). The cladding region (110) surrounds the core region (105). Moreover, the optical fiber (100) includes a first coating layer (115). The first coating layer (115) surrounds the cladding region (110). Further, the optical fiber (100) includes a second coating layer (120). The second coating layer (120) surrounds the first coating layer (115). The first coating layer (115) is made of UV curable acrylates. The first coating layer (115) has a first diameter in a range of 400 µm - 500 µm. The second coating layer (120) is made of UV curable acrylates. The second coating layer (120) has a second diameter in a range of 550 µm - 850 µm.

## Description

### TECHNICAL FIELD

The present disclosure relates to the field of fiber optic transmission and more specifically, the present disclosure relates to an optical fiber for indoor applications.

### BACKGROUND

Over the past few years, optical fibers have been increasingly employed for fiber to the home applications. These optical fibers provide possess high bandwidth, high throughput, high data rate and mechanical strength to sustain damages and ambient parameters. Typically, these optical fibers are coated with multiple coating layers in order to meet growing demands of mechanical and signal performance optimized optical fibers. These multiple coating layers surround a cladding region of these optical fibers. These multiple coating layers significantly determine physical characteristics of optical fibers such as macro-bends, chemical abrasion resistance, mechanical strength and the like. These multiple coating layers protect the optical fibers from physical damage and ambient environmental parameters. Further, these multiple coating layers provide flexibility as well as preserve the ability of the optical fibers to transmit signals.

In one of the prior art with patent application number US20100043953A1, an optical fiber is disclosed. The optical fiber includes a primary coating for protective purposes. The primary coating includes a first and a second polymeric coating layer. The polymeric coating layers may be obtained from compositions comprising oligomers and monomers. The oligomers and monomers are generally cross-linked by means of UV irradiation in the presence of a suitable photo-initiator. Typically, the two coating layers are made of UV cured acrylate resin. The two coating layers differ in terms of modulus of elasticity of the cross-linked material. In addition, the first coating layer (i.e., the inner) is typically softer than the second coating layer. The first coating layer has a thickness in a range of about 25 µm to 40 µm. The second coating layer has a thickness in a range of about 20 µm to 40 µm. Accordingly, the diameter of the first coating layer is less than 400 microns. However, the combination of material and limited diameter range does not provide sufficient mechanical and tensile strength to the optical fiber.

In light of the above stated discussion, there exists a need for an optical fiber having required strength for in-house applications.

### SUMMARY

According to one embodiment, an optical fiber comprises a core region defined by a region around a central longitudinal axis of the optical fiber, a cladding region surrounding the core region, a first coating layer surrounding the cladding region and a second coating layer surrounding the first coating layer. The first coating layer is made of UV curable acrylates. The first coating layer has a first diameter in a range of 400 µm - 500 µm. The first coating layer has a modulus in a range of 0.3 MPa - 3 MPa. The second coating layer is made of UV curable acrylates. The second coating layer has a second diameter in a range of 550 µm - 850 µm. The second coating layer has a modulus of greater than 1.2 GPa. The range of diameter and a type of material used for the first coating layer and the second coating layer provides strength greater than or equal to 5 GPa to the optical fiber.

Embodiments of the present disclosure substantially eliminate or at least partially address the aforementioned problems in the prior art, and provides an optical fiber for indoor applications. The optical fiber has strength greater than equal to 5 GPa. The optical fiber has reduced size. The optical fiber can be directly deployed for in-house applications without any need of cabling or buffering over the optical fiber and hence reduces cost of manufacturing. Moreover, the optical fiber has crush resistant properties suitable for an indoor staple installation and can withstand harsh environment. The optical fiber is flexible and can be resist effects of chemicals and moisture in contact.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

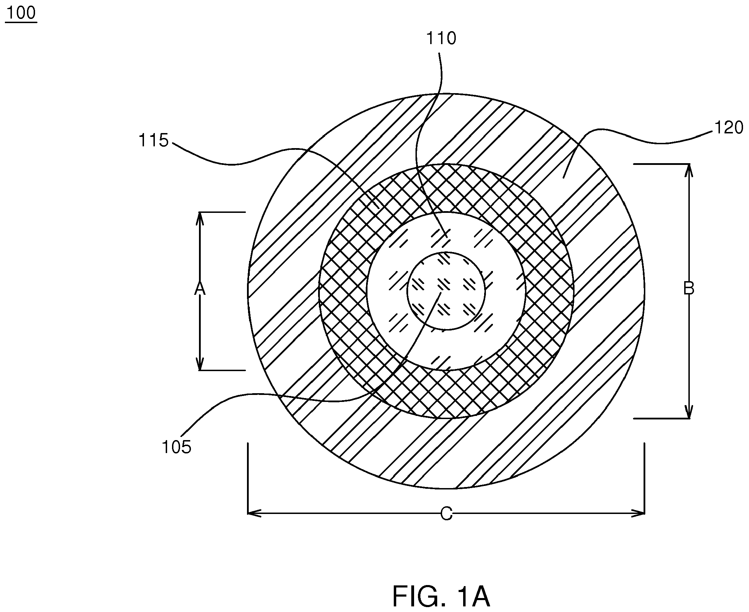

FIG. 1A illustrates a cross sectional view of an optical fiber, in accordance with an embodiment of the present disclosure; and

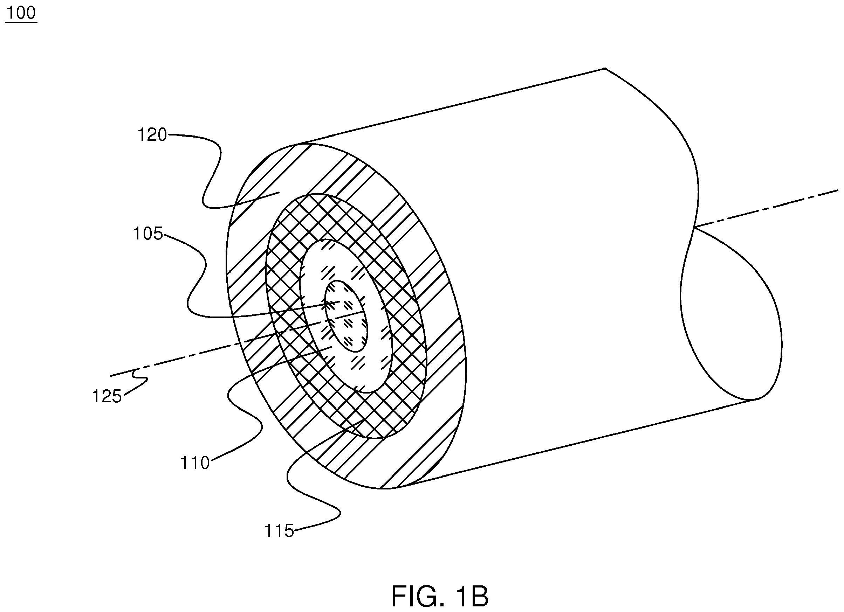

FIG. 1B illustrates a perspective view of the optical fiber of FIG. 1A, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

**FIG. 1A** illustrates a cross-sectional view of an optical fiber **100**, in accordance with an embodiment of the present disclosure. The optical fiber **100** is a fiber used for transmitting information as light pulses from one end to another. The optical fiber **100** is a thin strand of glass or plastic capable of transmitting optical signals. In addition, the optical fiber **100** allows transmission of information in the form of optical signals over long distances. In addition, the optical fiber **100** allows the transmission of information at high bandwidth. In general, a bandwidth is a measure of data-carrying capacity of the optical fiber **100**. In an embodiment of the present disclosure, the optical fiber **100** is a high diameter fiber.

In an embodiment of the present disclosure, the optical fiber **100** is utilized for broadband communication applications. In another embodiment of the present disclosure, the optical fiber **100** may be utilized for other applications. Moreover, the optical fiber **100** complies with specific telecommunication standards. The telecommunication standards are defined by International Telecommunication Union-Telecommunication (hereinafter "ITU-T"). In an embodiment of the present disclosure, the optical fiber **100** is compliant with G.657 recommendation standard of ITU-T. Furthermore, the ITU-T G.657 recommendation describes geometrical, mechanical and transmission attributes of a single mode bend insensitive optical fiber (shown as the optical fiber **100**).

In an embodiment of the present disclosure, the optical fiber **100** is a bend insensitive optical fiber. The bend insensitive optical fiber is characterized to have low sensitivity to fiber macro-bends and micro-bends. Further, the ITU-T G.657 standard defines a plurality of characteristics associated with the optical fiber **100**. The plurality of characteristics includes a mode field diameter, a cladding diameter, a cable cut-off wavelength, a macro bending loss, a dispersion and a refractive index. In addition, the plurality of characteristics includes a core concentricity error, a cladding non-circularity, an attenuation coefficient and the like.

The cladding non-circularity is defined as a percentage difference between a maximum radial deviation and minimum radial deviation between a center of core and cladding of the optical fiber **100** normalized to the diameter of the body. In an embodiment of the present disclosure, the optical fiber **100** has the cladding non-circularity parameter of less than equal to 1 %. The core concentricity error is defined as a scalar distance between the center of the core and the center of the cladding in micrometers. In an embodiment of the present disclosure, the optical fiber **100** has a core concentricity error of less than equal to 0.5 µm. Furthermore, the telecommunication standards are defined by International Electrotechnical Commission (hereinafter "IEC"). In an embodiment of the present disclosure, the optical fiber **100** is compliant with IEC 60794-2 standard.

Going further, the optical fiber **100** is manufactured by adopting a plurality of manufacturing techniques. In general, the manufacturing of optical fibers has two major stages. The first stage involves the manufacturing of optical fiber preforms and the second stage involves drawing the optical fibers from the optical fiber preforms. In general, the quality of optical fibers is determined during the manufacturing of the optical fiber preforms. So, a lot of attention is paid towards the manufacturing the optical fiber preforms. These optical fiber preforms include an inner glass core surrounded by a glass cladding having a lower index of refraction. Also, these preforms are manufactured as per the requirements related to a specific refractive index profile, a core diameter, a cladding diameter and the like. The plurality of manufacturing techniques adopted for manufacturing the optical fiber **100** includes but may not be limited to modified chemical vapor deposition, outside vapor deposition, vapor axial deposition, rod-in cylinder (RIC) and the like.

The optical fiber **100** includes a core region **105** a cladding region **110**, a first coating layer **115** and a second coating layer **120**. The core region **105** is an inner part of the optical fiber **100**. Moreover, the core region **105** and the cladding region **110** are formed during the manufacturing stage of the optical fiber **100**. The core region **105** is defined by a region around a central longitudinal axis **125** of the optical fiber **100**. In general, the core region **105** is defined as the region around the central longitudinal axis **125** of the optical fiber **100** through which light transmits. Furthermore, the central longitudinal axis **125** is associated with the optical fiber **100**. In general, the central longitudinal axis **125** of the optical fiber **100** passes through a geometrical center of the optical fiber **100** and is parallel to a length of the optical fiber **100** (as shown in **FIG. 1B**). In addition, the central longitudinal axis **125** is mutually perpendicular to a cross-section of the optical fiber **100**. The core region **105** is doped with at least one of germanium, fluorine or a combination of both.

Further, the cladding region **110** of the optical fiber **100** surrounds the core region **105** of the optical fiber **100**. In general, the cladding region **110** is defined as a region around the core region **105** which confines a light ray to travel within the core region **105** of the optical fiber **100**. In addition, the cladding region **110** confines the light ray in the core region **105** based on total internal reflection at a core-cladding interface. In general, total internal reflection in optical fiber **100** is a phenomenon of complete reflection of the light ray reaching the core-cladding interface. Furthermore, the core region **105** has a refractive index which is greater than a refractive index of the cladding region **110**. In an embodiment of the present disclosure, the core region **105** has a higher refractive index than the cladding region **110**. In an embodiment of the present disclosure, the cladding region **110** of the optical fiber **100** has a diameter (A) in a range of 124 µm - 126 µm.

Going further, the optical fiber **100** includes the first coating layer **115** and the second coating layer **120**. The first coating layer **115** surrounds the cladding region **110** of the optical fiber **100**. In an embodiment of the present disclosure, the first coating layer **115** is an inner coating layer. In an embodiment of the present disclosure, the first coating layer **115** is in direct contact with the cladding region **110**. In another embodiment of the present disclosure, one or more adhesive layers are present between the first coating layer **115** and the cladding region **110**.

The first coating layer **115** serves as a cushion and protects the optical behavior of the optical fiber **100** during bending, cabling and spooling of the optical fiber **100**. In addition, the first coating layer **115** protects the core region **105** and preserves the ability of the optical fiber **100** to transmit signals. In an embodiment of the present disclosure, the first coating layer **115** is present between the cladding region **110** and the second coating layer **120**. Moreover, the first coating layer **115** has a first diameter (B). The first diameter (B) lies in the range of 400 µm - 500 µm.

Further, the first coating layer **115** is formed of a material having low Young's modulus. The first coating layer **115** has a modulus in a range of 0.3 MPa to 3 MPa. The modulus or Young's modulus is a measure of stiffness of an elastic material. The first coating layer **115** is made of ultraviolet curable acrylates (hereinafter "UV curable acrylates"). Furthermore, the second coating layer **120** surrounds the first coating layer **115**. In an embodiment of the present disclosure, the second coating layer **120** is an outer coating layer. In an embodiment of the present disclosure, the second coating layer **120** is in direct contact with the first coating layer **115**. In another embodiment of the present disclosure, the one or more adhesive layers are present between the second coating layer **120** and the first coating layer **115**. The second coating layer **120** protects the optical fiber **100** from environmental exposure, mechanical damages, chemical attacks and the like. In addition, the second coating layer **120** enables an easy deployment of optical fiber **100**. Also, the second coating layer **120** is made of UV curable acrylates. In addition, the UV curable acrylates provide mechanical strength to the optical fiber **100**. UV cured acrylate material have low Young's modulus. Furthermore, the second coating material has a second diameter (C). The second diameter (C) lies in the range of 550 µm - 850 µm. The second coating layer **120** has a modulus of greater than 1.2 GPa.

The combination of the first coating layer **115** and the second coating layer **120** maintains the optical performance of the optical fiber **100**. In addition, the combination of the first diameter (B) and the material of the first coating layer **115** and the second diameter (C) and the material of the second coating layer **120** provides strength greater than or equal to 5 Giga-Pascal (hereinafter "GPa"). The combination of material and diameter of different layers of the optical fiber provides mechanical and tensile strength to the optical fiber. Different material combinations of the first coating layer **115** and the second coating layer **120** may be used to maintain the optical performance and strength of the optical fiber **100**. Moreover, the optical fiber **100** has dual coatings to facilitate direct installation in in-house or harsh environments.

Furthermore, different diameter combinations associated with the first coating layer **115** and the second coating layer **120** may be used to maintain the strength of the optical fiber **100** to less than 5 GPa. In an embodiment of the present disclosure, the strength of the optical fiber **100** is no less than 5 GPa when the first coating layer **115** has a diameter of 400 µm and the second coating layer **120** has the diameter of 550 µm. In another embodiment of the present disclosure, the strength of the optical fiber **100** is no less than 5 GPa when the first coating layer **115** has the diameter of 500 µm and the second coating layer **120** has the diameter of 850 µm. In yet another embodiment of the present disclosure, the strength of the optical fiber **100** is no less than 5 GPa when the first coating layer **115** has the diameter of 450 µm and the second coating layer **120** has the diameter of 700 µm.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical fiber (100) comprising:
a core region (105) defined by a region around a central longitudinal axis (125) of the optical fiber (100);
a cladding region (110) surrounding the core region (105);
a first coating layer (115) surrounding the cladding region (110); and
a second coating layer (120) surrounding the first coating layer (115),
**characterized in that**
the first coating layer (115) is made of UV curable acrylates, the first coating layer (115) has a first diameter in a range of 400 µm - 500 µm, the first coating layer (115) has a modulus in a range of 0.3 MPa - 3 MPa, the second coating layer (120) is made of UV curable acrylates, the second coating layer (120) has a second diameter in a range of 550 µm - 850 µm, the second coating layer (120) has a modulus of greater than 1.2 GPa and the range of diameter and a type of material used for the first coating layer (115) and the second coating layer (120) provides strength greater than or equal to 5 GPa to the optical fiber (100).

2. The optical fiber (100) as claimed in claim 1, wherein the optical fiber (100) is a bend insensitive fiber.

3. The optical fiber (100) as claimed in claim 1, wherein the optical fiber (100) meets requirements of ITU-T G657 A2.

4. The optical fiber (100) as claimed in claim 1, wherein the optical fiber (100) meets requirements of ITU-T G657 B3.

5. The optical fiber (100) as claimed in claim 1, wherein the optical fiber (100) complies with IEC 60794-2 standard.

6. The optical fiber (100) as claimed in claim 1, wherein the cladding region (110) has a diameter in a range of 124 µm - 126 µm.

7. The optical fiber (100) as claimed in claim 1, wherein the optical fiber (100) has a cladding non-circularity parameter of less than equal to 1 %.

8. The optical fiber (100) as claimed in claim 1, wherein the optical fiber (100) has a core concentricity error of less than equal to 0.5 µm.
